# EUROPEAN PATENT APPLICATION

(11) **EP 4 589 748 A1**
(43) Date of publication of application: **23.07.2025**
(21) Application number: 24875617.3
(22) Date of filing: 06.09.2024
(51) Int. Cl.: H01M 50/289, H01M 50/244, H01M 50/204, H01M 10/613, H01M 10/6568

(54) **BATTERY MODULE AND BATTERY PACK**

(30) Priority: 18.10.2023 CN 202322794156 U
(71) Applicant: Eve Energy Co., Ltd., Huizhou, Guangdong 516006 (CN)
(72) Inventor: LIU, Qiang, Huizhou, Guangdong 516006 (CN); WANG, Haixu, Huizhou, Guangdong 516006 (CN); CHEN, Xinfeng, Huizhou, Guangdong 516006 (CN)
(74) Representative: Prinz & Partner mbB
(86) International application number: PCT/CN2024/117365
(87) International publication number: WO 2025/082093

(57) **Abstract**

Provided are a battery module and a battery pack. The battery pack includes a battery module. The battery module includes a liquid cooling structure and multiple battery cells. The liquid cooling structure includes an upper case plate, a lower case plate, and a support member. The upper case plate and the lower case plate are oppositely arranged to form accommodation spaces, a surface of the upper case plate and a surface of the lower case plate facing each other are cooling surfaces, the cooling surfaces are provided with grooves, and the grooves are adapted to the circumferential side surfaces of the battery cells. The support member extends along the upper case plate and is perpendicularly connected between the upper case plate and the lower case plate.

## Description

This application claims priority to Chinese Patent Application No. 202322794156.9 filed with the China National Intellectual Property Administration (CNIPA) on Oct. 18, 2023, the disclosure of which is incorporated herein by reference in its entirety.

### TECHNICAL FIELD

The present application relates to the field of battery technology and, in particular, to a battery module and a battery pack.

### BACKGROUND

A battery generates heat during charging and discharging, and the heat is mainly removed by a coolant flowing in a liquid cooling plate. A conventional battery module mostly adopts a liquid cooling plate in the form of a serpentine tube to dissipate heat from battery cells. In the process of grouping battery cells into a battery module, individual battery cells are first placed vertically in a tray in sequence, and then a serpentine tube is placed between two adjacent rows of battery cells to form the battery module. Such a form of battery module has a relatively complex structure.

### TECHNICAL PROBLEM

Since multiple battery modules are assembled in a pack box to form a battery pack, to enhance the structural strength of the pack box, cross beams are generally arranged inside the pack box. The cross beams divide the inside of the pack box into multiple cavities, and the assembled battery modules are accommodated in the cavities. However, the arrangement of cross beams complicates the internal structure of the pack box and increases manufacturing costs, and the cross beams also occupy the internal space of the pack box so that the utilization of the internal space of the pack box by the battery modules is reduced.

### TECHNICAL SOLUTION

In a first aspect, an embodiment of the present application provides a battery module. The battery module includes a liquid cooling structure and multiple battery cells. The liquid cooling structure includes an upper case plate, a lower case plate, and a support member.

The upper case plate and the lower case plate are oppositely arranged to form accommodation spaces. A surface of the upper case plate and a surface of the lower case plate facing each other are cooling surfaces. The cooling surfaces are provided with grooves. The grooves are adapted to the circumferential side surfaces of the battery cells. The battery cells are arranged in the accommodation spaces, and the circumferential side surfaces of the battery cells are fitted to the grooves.

The support member extends in the length direction of the upper case plate and is perpendicularly connected between the upper case plate and the lower case plate.

In a second aspect, an embodiment of the present application provides a battery pack. The battery pack includes a pack box and multiple battery modules described above, and the multiple battery modules are arranged inside the pack box.

### BENEFICIAL EFFECT

The present application has the following beneficial effects.

In the battery module provided by the present application, the liquid cooling structure may serve as a bracket for installing battery cells so that the battery cells may be directly integrated and arranged on the liquid cooling structure, thereby simplifying the structure of the battery module. During the grouping of battery cells, individual battery cells are directly placed horizontally in the accommodation space in sequence, and the circumferential side surfaces of the battery cells are fitted to the grooves to achieve relatively good heat conduction. In this manner, the battery module may be assembled. The grouping process of battery cells is simple, and the grouping efficiency is high. Additionally, the liquid cooling structure and the battery cells are implemented in a modular design so that the entire battery module is lightweight and compact, thereby facilitating transportation and installation. On this basis, after the battery module is horizontally arranged inside the pack box of the battery pack, the upper case plate may serve as a cross beam at the top of the inner side of the pack box, and the lower case plate may serve as a cross beam at the bottom of the inner side of the pack box, thereby enhancing the structural strength of the pack box. Accordingly, no cross beam needs to be separately arranged on the upper cover and the lower cover of the pack box, thereby reducing the complexity of the structural design of the pack box and decreasing costs. The pack box may be designed to be flat without cross beams, the overall structure of the pack box is compact after the battery module is packed, and the space utilization is good.

By setting the battery modules described above in the battery pack provided by the present application, the structure of the pack box is simplified, and the space utilization of the pack box is improved.

### BRIEF DESCRIPTION OF THE DRAWINGS

FIG. 1 is a structural view of a battery module according to an embodiment of the present application;
FIG. 2 is a partial isometric sectional view of a liquid cooling structure according to an embodiment of the present application;
FIG. 3 is a structural view of the battery module where a CCS component is hidden according to an embodiment of the present application at a first viewing angle;
FIG. 4 is a structural view of the battery module where the CCS component is hidden according to an embodiment of the present application at a second viewing angle; and

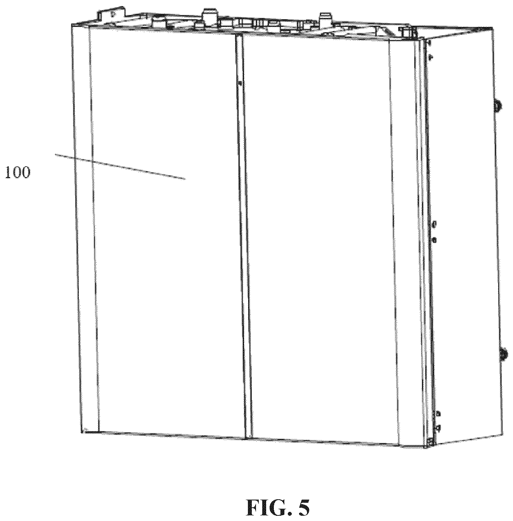

FIG. 5 is a structural view of a pack box according to an embodiment of the present application.

In the drawings:
10. liquid cooling structure;
11. upper case plate; 111. cooling surface; 112. groove; 113. liquid inlet flow passage; 114. liquid inlet joint; 12. lower case plate; 121. liquid outlet flow passage; 122. liquid outlet joint; 13. support member; 131. accommodation groove; 132. exhaust passage; 14. accommodation space;
15. connecting tube;
20. battery cell;
30. CCS component;
100. pack box.

### DETAILED DESCRIPTION

The present application is described hereinafter in conjunction with drawings and embodiments. The embodiments described herein are intended to illustrate and not to limit the present application. For ease of description, part, not all, of structures related to the present application are illustrated in the drawings.

In the description of the present application, the terms "joined", "connected", and "secured" are to be understood in a broad sense unless otherwise expressly specified and limited. For example, the term "connected" may refer to "securely connected", "detachably connected", or "integrated", may refer to "mechanically connected" or "electrically connected", may refer to "connected directly" or "connected indirectly through an intermediary", or may refer to "connected inside two elements" or "an interaction relation between two elements". Meanings of the preceding terms in the present application may be understood based on situations.

In the present application, unless otherwise expressly specified and limited, when a first feature is described as "above" or "below" a second feature, the first feature and the second feature may be in direct contact, or the first feature and the second feature may be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description herein, orientations or position relations indicated by terms such as "above", "below", "left", and "right" are based on the drawings. These orientations or position relations are intended to facilitate the description and simplify an operation and not to indicate or imply that a device or element referred to have such particular orientations or be configured or operated in such particular orientations. Therefore, these orientations or position relations are not to be construed as limiting the present application. In addition, the terms "first" and "second" are used for distinguishing between descriptions and have no special meanings.

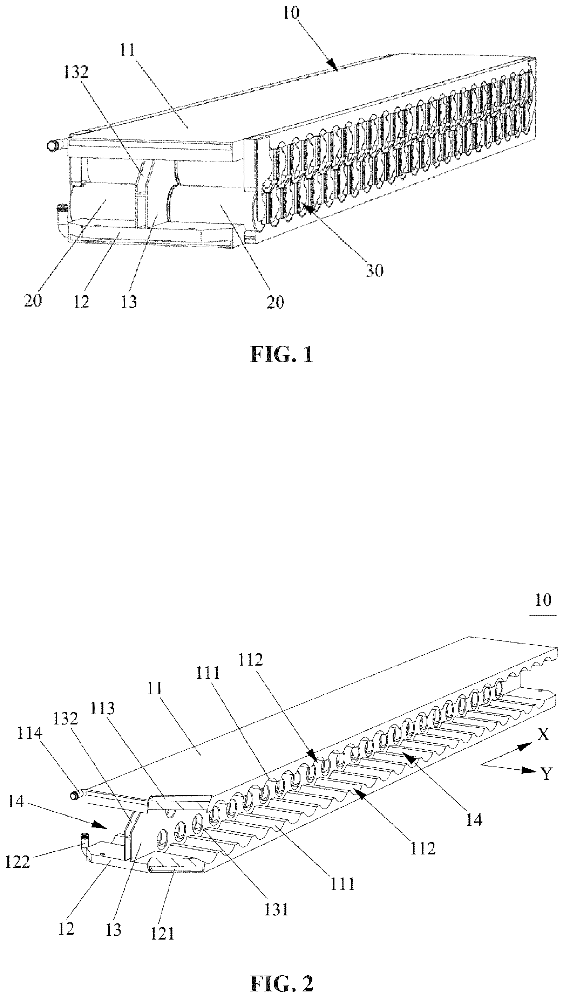

An embodiment provides a battery pack. The battery pack includes a pack box 100 and multiple battery modules, and the multiple battery modules are arranged inside the pack box 100. One or more battery modules may be arranged. For example, as shown in FIGS. 1 to 3, the battery module provided by this embodiment includes a liquid cooling structure 10 and multiple battery cells 20. The liquid cooling structure 10 includes an upper case plate 11, a lower case plate 12, and a support member 13. The upper case plate 11 and the lower case plate 12 are both liquid cooling plates. The upper case plate 11 and the lower case plate 12 are parallel to each other and oppositely arranged to form accommodation spaces 14. A surface of the upper case plate 11 and a surface of the lower case plate 12 facing each other are cooling surfaces 111. The cooling surfaces are provided with grooves 112. The grooves 112 are adapted to the circumferential side surface of the battery cell. The battery cells 20 are arranged in the accommodation spaces 14, and the circumferential side surfaces of the battery cells 20 are fitted to the grooves 112. The support member 13 extends in the length direction of the upper case plate 11 and is perpendicularly connected between the upper case plate 11 and the lower case plate 12.

In the battery module provided by this embodiment, the liquid cooling structure 10 may serve as a bracket for installing battery cells 20 so that the battery cells 20 may be directly integrated and arranged on the liquid cooling structure 10, thereby simplifying the structure of the battery module. During grouping of battery cells 20, individual battery cells 20 are directly placed horizontally in the accommodation space 14 in sequence, one end of each battery cell 20 is arranged into a corresponding accommodation groove 131 for positioning, and the circumferential side surface of the battery cell 20 is fitted to a corresponding groove 112 on the cooling surface 111 to achieve relatively good heat conduction. In this manner, the battery module may be assembled. The grouping process of battery cells 20 is simple, and the grouping efficiency is high. Additionally, the liquid cooling structure 10 and the battery cells 20 are implemented in a modular design so that the entire battery module is lightweight and compact, thereby facilitating transportation and installation. The battery module may be directly horizontally placed inside the pack box of the battery pack. Multiple battery modules may be arranged in the length and width directions of the pack box, and the number of battery modules to be arranged may be adaptively selected according to capacity requirements. On this basis, while the upper case plate 11 and the lower case plate 12 both serve as liquid cooling plates, the upper case plate 11 may also serve as a cross beam at the top of the inner side of the pack box, and the lower case plate 12 may also serve as a cross beam at the bottom of the inner side of the pack box, thereby enhancing the structural strength of the pack box. Accordingly, no cross beam needs to be separately arranged on the upper cover and the lower cover of the pack box, thereby reducing the complexity of the structural design of the pack box and decreasing costs. The pack box may be designed to be flat without cross beams, the overall structure of the pack box is compact after the battery module is packed, and the space utilization is good.

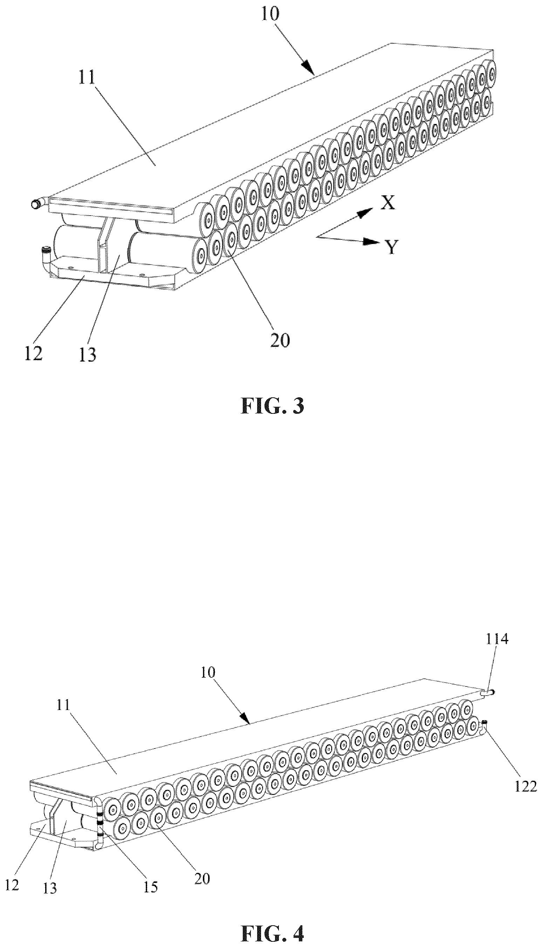

In conjunction with FIGS. 2 and 3, for ease of understanding, the length direction of the upper case plate 11 is defined as the direction X, and the width direction of the upper case plate 11 is defined as the direction Y. The support member 13 is connected to the intermediate location of the upper case plate 11 and the intermediate location of the lower case plate 12 in the width direction of the upper case plate 11 so that the liquid cooling structure 10 is constructed as an I-shaped structure. Two accommodation spaces 14 are formed between the upper case plate 11 and the lower case plate 12, and the support member 13 separates the two accommodation spaces 14 from each other. Each accommodation space 14 is provided with two rows of battery cells 20 stacked on top of one another, and the battery cells 20 of each row are arranged in the direction X. The circumferential side surfaces of the upper row of battery cells 20 are fitted to the grooves 112 on the upper case plate 11, and the circumferential side surfaces of the lower row of battery cells 20 are fitted to the grooves 112 on the lower case plate 12. That is, four rows of battery cells 20 may be arranged in each liquid cooling structure 10. Under the premise of simplifying the grouping process, the space in the liquid cooling structure 10 is efficiently utilized, the space utilization is increased, and the energy density of the battery module is improved. Moreover, the I-shaped liquid cooling structure 10 increases the structural strength so the structure of the battery module is relatively stable.

As shown in FIG. 1, the battery module further includes a cells contact system (CCS) component 30. The CCS component 30 is electrically connected to the ends of the multiple battery cells 20 facing away from the support member 13. The CCS component 30 is configured to implement the electrical connection or signal detection of the battery cells 20 to achieve the output of voltages. The CCS assembly 30 belongs to the related art so the specific structure and the working principle thereof are not repeated here.

As shown in FIGS. 2 and 3, the cooling surface 111 is wavy to form multiple grooves 112. The circumferential side surface of each battery cell 20 is fitted to a corresponding groove 112, and the upper and lower rows of battery cells 20 are staggered. In this embodiment, the battery cell 20 is cylindrical, and the corresponding groove 112 is arc-shaped so that the inner wall of the arc-shaped groove 112 may be fitted to the circumferential side surface of the battery cell 20. In this manner, the contact area is large, the battery cell 20 is stably fixed, and the heat exchange rate is high, so the battery cell 20 is cooled well, thereby improving the heat dissipation effect.

A thermally conductive adhesive is filled between each groove 112 and the circumferential side surface of a corresponding battery cell 20. In one aspect, the thermally conductive adhesive reduces the contact thermal resistance between the case plate and the battery cell 20, and the thermal conductivity effect is better. In another aspect, the thermally conductive adhesive may fix multiple battery cells 20 into the corresponding grooves 112 to form a modular structure, and the structure is stable and reliable. During operation, the adhesive may be applied to the side walls of the grooves 112 first, and then the battery cells 20 may be arranged in the corresponding grooves 112; or the battery cells 20 may be arranged in the corresponding grooves 112 first, and after all the battery cells 20 are assembled, the entire battery module may be filled with the adhesive.

As shown in FIG. 2, the support member 13 is provided with multiple accommodation grooves 131, and one end of a battery cell 20 is arranged in a corresponding accommodation groove 131. The accommodation groove 131 is configured to position the location of the battery cell 20 to stably fix the battery cell 20.

In conjunction with FIGS. 2 and 3, taking applying the adhesive first as an example, the grouping process of the battery module may be as follows: the liquid cooling structure 10 is cleaned to wash away impurities on the surface of the liquid cooling structure 10. With the support member 13 as an interface, the liquid cooling structure 10 is divided into a first side and a second side. The adhesive is applied to the side walls of the grooves 112 on the upper case plate 11 and the lower case plate 12 on the first side to form a thermally conductive adhesive. Multiple battery cells 20 are horizontally arranged in the accommodation space 14 on the first side in sequence, one end of each battery cell 20 is arranged into a corresponding accommodation groove 131 for positioning, and the circumferential side surface of each battery cell 20 is in contact with the thermally conductive adhesive. After the stacking of battery cells 20 on the first side is completed, the adhesive is applied to the grooves 112 on the second side, and battery cells 20 are stacked on the second side. In this manner, the battery cells 20 are all integrated and arranged on the liquid cooling structure 10. The CCS components 30 are installed on both sides, respectively. The first side may be any side of the liquid cooling structure 10 in the width direction of the liquid cooling structure 10, and the second side may be the opposite side.

A liquid inlet flow passage 113 is arranged inside one of the upper case plate 11 and the lower case plate 12, and a liquid outlet flow passage 121 is arranged inside the other of the upper case plate 11 and the lower case plate 12. One end of one of the upper case plate 11 and the lower case plate 12 is provided with a liquid inlet joint 114, and the same end of the other of the upper case plate 11 and the lower case plate 12 is provided with a liquid outlet joint 122. The liquid inlet joint 114 is in communication with the liquid inlet flow passage 113, and the liquid outlet joint 122 is in communication with the liquid outlet flow passage 121. A connecting tube 15 is arranged between another end of the upper case plate 11 and another end of the lower case plate 12, and the connecting tube 15 is in communication with the liquid inlet flow passage 113 and the liquid outlet flow passage 121.

As shown in FIGS. 2 and 4, in an embodiment, the liquid inlet flow passage 113 is arranged inside the upper case plate 11, and the liquid outlet flow passage 121 is arranged inside the lower case plate 12. One end of the upper case plate 11 is provided with the liquid inlet joint 114, and the same end of the lower case plate 12 is provided with the liquid outlet joint 122. The liquid inlet joint 114 is in communication with the liquid inlet flow passage 113, and the liquid outlet joint 122 is in communication with the liquid outlet flow passage 121. The connecting tube 15 is arranged between another end of the upper case plate 11 and another end of the lower case plate 12, and the connecting tube 15 is in communication with the liquid inlet flow passage 113 and the liquid outlet flow passage 121. A coolant flows into the liquid inlet flow passage 113 of the upper case plate 11 through the liquid inlet joint 114, flows along the liquid inlet flow passage 113, flows into the liquid outlet flow passage 121 of the lower case plate 12 through the connecting tube 15, flows along the liquid outlet flow passage 121, and returns to a refrigeration device through the liquid outlet joint 122, thereby forming a liquid cooling circuit. Through the circulation flow of the coolant, the coolant absorbs the heat generated by the battery cells 20 and discharges the heat along with the flow of the coolant, thereby lowering the temperature of the battery cells 20. In another embodiment, the liquid inlet flow passage 113 and the liquid inlet joint 114 may also be arranged on the lower case plate 12, and the liquid outlet flow passage 121 and the liquid outlet joint 122 may be arranged on the upper case plate 11. Similarly, through the circulation flow of the coolant, the coolant may also absorb the heat generated by the battery cells 20 and discharge the heat along with the flow of the coolant to lower the temperature of the battery cells 20. The arrangement of the liquid inlet flow passage 113, the liquid inlet joint 114, the liquid outlet flow passage 121, and the liquid outlet joint 122 is not limited here.

The battery module further includes a serpentine tube. The serpentine tube is arranged between the two rows of battery cells 20, and the circumferential side surfaces of battery cells 20 located on two sides of the serpentine tube are fitted to the surface of the serpentine tube. That is, both sides of the battery cells 20 of each row are fitted to liquid cooling parts. In this manner, double-sided liquid cooling of the battery cells 20 is achieved, and the heat dissipation area is sufficiently large, thereby improving heat dissipation efficiency. For some battery cells 20 generating a large amount of heat, efficient heat dissipation is achieved, thereby ensuring the safety and service life of the battery module.

As shown in FIG. 2, the support member 13 is provided with an exhaust passage 132. The exhaust passage 132 extends in the length direction of the support member 13. Multiple accommodation grooves 131 are arranged on opposite sides of the support member 13, and the accommodation grooves 132 are in communication with the exhaust passage 131. By providing the exhaust passage 132, when a battery cell 20 expands and explodes, pressure relief and heat dissipation may be implemented through the exhaust passage 132. On this basis, the exhaust design at the bottom of the pack box is correspondingly reduced, thereby reducing space occupation.

The upper case plate 11, the lower case plate 12, and the support member 13 are integrally formed. In this manner, not only the liquid cooling structure 10 is convenient to process to reduce manufacturing costs, but also the structural strength of the liquid cooling structure 10 is enhanced.

The I-shaped liquid cooling structure 10 may also be applied to square battery cells 20. If the battery cells 20 are square, the case plates at the upper and lower ends may be replaced with support plates, the support member 13 in the middle may be replaced with a case plate, the square battery cells are erected between the upper and lower support plates, and the larger surface of each square battery cell 20 is fitted to and in contact with the case plate.

## Claims

1. A battery module, comprising a liquid cooling structure (10) and a plurality of battery cells (20), wherein the liquid cooling structure (10) comprises:
an upper case plate (11) and a lower case plate (12), wherein the upper case plate (11) and the lower case plate (12) are oppositely arranged to form accommodation spaces (14), a surface of the upper case plate (11) and a surface of the lower case plate (12) facing each other are cooling surfaces (111), the cooling surfaces (111) are provided with grooves (112), the grooves (112) are adapted to circumferential side surfaces of the plurality of battery cells (20), the plurality of battery cells (20) are arranged in the accommodation spaces (14), and the circumferential side surfaces of the plurality of battery cells (20) are fitted to the grooves (112); and
a support member (13) extending in a length direction of the upper case plate (11) and perpendicularly connected between the upper case plate (11) and the lower case plate (12).

2. The battery module according to claim 1, wherein the support member (13) is connected to an intermediate location of the upper case plate (11) and an intermediate location of the lower case plate (12) in a width direction of the upper case plate (11), two accommodation spaces (14) are formed between the upper case plate (11) and the lower case plate (12), and each of the two accommodation spaces (14) is provided with two rows of battery cells (20) stacked on top of one another, wherein circumferential side surfaces of one row of battery cells (20) are fitted to grooves (112) on the upper case plate (11), and circumferential side surfaces of the other row of battery cells (20) are fitted to grooves (112) on the lower case plate (12).

3. The battery module according to claim 2, wherein the cooling surface (111) is wavy to form a plurality of grooves (112), and a circumferential side surface of each of the plurality of battery cells (20) is fitted to a corresponding groove (112) of the plurality of grooves (112).

4. The battery module according to claim 3, wherein a thermally conductive adhesive is filled between each of the plurality of grooves (112) and a circumferential side surface of a corresponding battery cell (20) of the plurality of battery cells (20).

5. The battery module according to claim 2, wherein a liquid inlet flow passage (113) is arranged inside one of the upper case plate (11) and the lower case plate (12), and a liquid outlet flow passage (121) is arranged inside the other of the upper case plate (11) and the lower case plate (12);
one end of one of the upper case plate (11) and the lower case plate (12) is provided with a liquid inlet joint (114), a same end of the other of the upper case plate (11) and the lower case plate (12) is provided with a liquid outlet joint (122), the liquid inlet joint (114) is in communication with the liquid inlet flow passage (113), the liquid outlet joint (122) is in communication with the liquid outlet flow passage (121), a connecting tube (15) is arranged between another end of the upper case plate (11) and another end of the lower case plate (12), and the connecting tube (15) is in communication with the liquid inlet flow passage (113) and the liquid outlet flow passage (121).

6. The battery module according to claim 2, wherein the battery module further comprises a serpentine tube, the serpentine tube is arranged between the two rows of battery cells (20), and circumferential side surfaces of battery cells (20) located on two sides of the serpentine tube are fitted to a surface of the serpentine tube.

7. The battery module according to any one of claims 1 to 6, wherein the support member (13) is provided with a plurality of accommodation grooves (131), and one end of a battery cell (20) of the plurality of battery cells (20) is arranged in a corresponding accommodation groove (131) of the plurality of accommodation grooves (131).

8. The battery module according to claim 7, wherein the support member (13) is provided with an exhaust passage (132), the exhaust passage (132) extends in a length direction of the support member (13), the plurality of accommodation grooves (131) are arranged on opposite sides of the support member (13), and the plurality of accommodation grooves (131) are in communication with the exhaust passage (132).

9. The battery module according to any one of claims 1 to 6, wherein the upper case plate (11), the lower case plate (12), and the support member (13) are integrally formed.

10. A battery pack, comprising a pack box and a plurality of battery modules according to any one of claims 1 to 9, wherein the plurality of battery modules are arranged inside the pack box.
